# EUROPÄISCHE PATENTANMELDUNG

(11) **EP 2 799 170 A1**
(43) Veröffentlichungstag der Anmeldung: **05.11.2014**
(21) Anmeldenummer: 13165874.2
(22) Anmeldetag: 30.04.2013
(51) Int. Cl.: B23B 31/12, B23B 31/16

(54) **Handwerkzeugmaschine und Steuerungsverfahren**

(71) Anmelder: HILTI Aktiengesellschaft, 9494 Schaan (LI)
(72) Erfinder: Schubert, Wolfgang, 86899 Landsberg (DE)
(74) Vertreter: Hilti Aktiengesellschaft Corporate Intellectual Property

(57) **Zusammenfassung**

Die erfindungsgemäße Handwerkzeugmaschine **1** hat ein Maschinengehäuse **13,** einen Motor **8,** eine von dem Motor **8** angetriebenen Welle **9,** und eine Werkzeugaufnahme **3.** Die Werkzeugaufnahme **3** ist auf der Welle **9** gelagert. Die Werkzeugaufnahme **3** hat einen Aufnahmeraum **4** zum Aufnehmen eines Werkzeugs **2** und eine in einer Kulisse **31** geführte in den Aufnahmeraum **4** hineinragende Spannbacke **6,** vorzugsweise mehrere Spannbacken **6,** beispielsweise drei. Ein Schlitten **33,** der mit der Spannbacke **6** gekoppelt ist, ist mit einem Gewindeantrieb **32** versehen, der aus einem Gewinde **34** an dem Schlitten **33** und einem Gegengewinde **35** an der Welle **9** aufweist. Ein von einem Anwender zwischen einer ersten Stellung **26** und einer zweiten Stellung **27** verschiebbares Betätigungselement **25** ist zum Anwählen eines Arbeitsbetriebs oder einem Lösen/Spannen der Spannbacken **6** vorgesehen. Eine umschaltbare Kupplung **29** ist auf der Werkzeugaufnahme **3** gelagert. Die umschaltbare Kupplung **29** greift den Stellungen des Betätigungselements **25** entsprechend alternativ in die Welle **9** oder das Maschinengehäuse **13** ein.

## Beschreibung

### GEBIET DER ERFINDUNG

Die vorliegende Erfindung betrifft eine Handwerkzeugmaschine, insbesondere einen Elektroschrauber, dessen Spannbacken mittels eines Motor spannbar und lösbar sind.

Aus der EP 2 537 612 A2 ist ein Elektroschrauber mit einer Werkzeugaufnahme bekannt, deren Spannbacken ein Anwender mittels des Motors des Elektroschraubers spannen und lösen kann. Der Elektroschrauber enthält eine Kupplungsplatte, die in den Antriebsstrang zwischen Motor und Werkzeugaufnahme geschaltet ist. Die Kupplungsplatte ist vom Anwender axial verschiebbar und verbindet in einer ersten Stellung für einen Arbeitsbetrieb den Motor mit der Werkzeugaufnahme. In der zweiten Stellung wird die Werkzeugaufnahme vom Motor abgekoppelt, dafür wird zum Spannen/Lösen von Spannbacken ein Gewindeantrieb an den Motor angekoppelt. Für den Gewindeantrieb ist in der Werkzeugaufnahme eine Durchgangsbohrung mit einem Innengewinde vorgesehen, in welches ein Läufer mit einem entsprechenden Gegengewinde eingesetzt ist.

Aus der EP 2 517 811 A1 ist ein Elektroschrauber mit einer Werkzeugaufnahme bekannt. Die Werkzeugaufnahme wird von einer hohlen Spindel angetrieben, in welcher frei drehbar ein Gewindeantrieb angeordnet ist. Der Gewindeantrieb ist mit den Spannbacken gekoppelt. Die hohle Spindel kann wahlweise an den Motor angekoppelt werden. Dies erfolgt durch eine axial verschiebbare Getriebestufe, welche in einer ersten Stellung die hohle Spindel und den Gewindeantrieb für einen Arbeitsbetrieb und welche in einer zweiten Stellung nur den Gewindeantrieb zum Spannen/Lösen der Spannbacken antreibt.

### OFFENBARUNG DER ERFINDUNG

Die erfindungsgemäße Handwerkzeugmaschine hat ein Maschinengehäuse, einen Motor, eine von dem Motor angetriebenen Welle und eine Werkzeugaufnahme. Die Werkzeugaufnahme ist auf der Welle gelagert. Die Werkzeugaufnahme hat einen Aufnahmeraum zum Aufnehmen eines Werkzeugs und eine in einer Kulisse geführte in den Aufnahmeraum hineinragende Spannbacke, vorzugsweise mehrere Spannbacken, beispielsweise drei. Ein Schlitten, der mit der Spannbacke gekoppelt ist, ist mit einem Gewindeantrieb versehen. Der Gewindeantrieb hat ein Gewinde an dem Schlitten und ein Gegengewinde an der Welle. Ein von einem Anwender zwischen einer ersten Stellung und einer zweiten Stellung verschiebbares Betätigungselement ist zum Anwählen eines Arbeitsbetriebs oder einem Lösen/Spannen der Spannbacken vorgesehen. Eine umschaltbare Kupplung ist auf der Werkzeugaufnahme gelagert. Die umschaltbare Kupplung greift den Stellungen des Betätigungselements entsprechend alternativ in die Welle oder in das Maschinengehäuse ein. Die umschaltbare Kupplung greift in der ersten Stellung nur in die Welle und in der zweiten Stellung nur in das Maschinengehäuse ein. Da die schaltbare Kupplung an der Werkzeugaufnahme gelagert ist, wird diese somit alternativ an die Welle und das Maschinengehäuse angekoppelt.

Das Anbringen der schaltbaren Kupplung an der Werkzeugaufnahme ermöglicht einen kompakten und robusten Aufbau. Die die Werkzeugaufnahme antreibende Welle benötigt keine durchgehende Bohrung, welche aufwändig herzustellen ist, ohne die Funktionalität beispielsweise gegenüber EP 2 517 811 A1 einschränken zu müssen.

Eine Ausgestaltung sieht vor, dass die Werkzeugaufnahme relativ zu der Welle drehbar auf der Welle gelagert ist. Die Welle ist permanent an den Motor gekoppelt. Die Welle ist vorzugsweise unmittelbar mit einem Getriebe oder dem Motor verbunden. Ferner ist die Welle vorzugsweise einteilig ausgebildet. Die Kraft- / Drehmomentübertragung von dem Motor auf die Werkzeugaufnahme ist aufgrund der geringen Zahl von im Kraftfluss angeordneten Komponenten effizient. Ferner ist sichergestellt, dass eine Drehmomentübertragung für den Arbeitsbetrieb sowohl über die schaltbare Kupplung als auch über die Gewindeantrieb erfolgt. Eine Ausgestaltung sieht vor, dass das Gegengewinde als Sackloch in der Welle ausgebildet ist.

Ein Steuerungsverfahren für die Handwerkzeugmaschine mit der Werkzeugaufnahme, den beweglichen Spannbacken und dem Betätigungsmechanismus zum Wählen zwischen einem Antreiben der Werkzeugaufnahme oder einem Spannen/Lösen der Spannbacken mittels eines Motors sieht folgende Schritte vor. Eine Drehmomentbegrenzung wird aktiviert, wenn ein elektrischer Geber meldet, dass der Betätigungsmechanismus auf Spannen/Lösen gesetzt ist. Die Drehmomentabgabe des Motors wird auf einen auf das Spannen und Lösen der Spannbacken abgestimmten Abschaltwert begrenzt. Der Anwender hat keine Möglichkeit auf den Abschaltwert einzuwirken, hierdurch wird eine Fehlbedienung verhindert. Der Abschaltwert ist typischerweise mit 10 N/m bis 15 N/m, z.B. 12 N/m, vergleichsweise gering, verglichen zur Drehmomentabgabe im Betrieb. Der Motor wird deaktiviert, wenn der Abschaltwert erreicht ist. Das Werkzeug ist nun fest eingespannt.

Eine Ausgestaltung sieht vor, dass die Handwerkzeugmaschine ein Schaltgetriebe mit einem elektrischen Geber aufweist. Der Geber erzeugt ein dem gewählten Übersetzungsverhältnis anzeigendes Signal (zweites Signal). Die Drehmomentbegrenzung wird ansprechend auf das Signals des Betätigungsmechanismus aktiviert. Die Drehmomentabgabe des Motors wird unter Berücksichtigung des zweiten Signals derart begrenzt, dass von dem Schaltgetriebe ein dem Abschaltwert für das Spannen und Lösen der Spannbacken abgestimmtes Drehmoment abgegeben wird. Der Motor wird deaktiviert, wenn der Sollwert erreicht ist. Das Werkzeug ist nun fest eingespannt.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 eine schematische Darstellung eines Elektroschraubers
Fig. 2 den Elektroschrauber in einer Draufsicht
Fig. 3 eine Teilansicht auf eine Ausführungsform
Fig. 4 die Ausführungsform im Längsschnitt bei Grundstellung
Fig. 5 die Ausführungsform im Längsschnitt bei Spannen/Lösen-Stellung
Fig. 6 eine Ausführungsform im Längsschnitt bei Grundstellung
Fig. 7 die Ausführungsform im Längsschnitt bei Spannen/Lösen-Stellung
Fig. 8 einen Querschnitt durch einen Bahnkontakt
Fig. 9 einen Querschnitt durch den Bahnkontakt

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

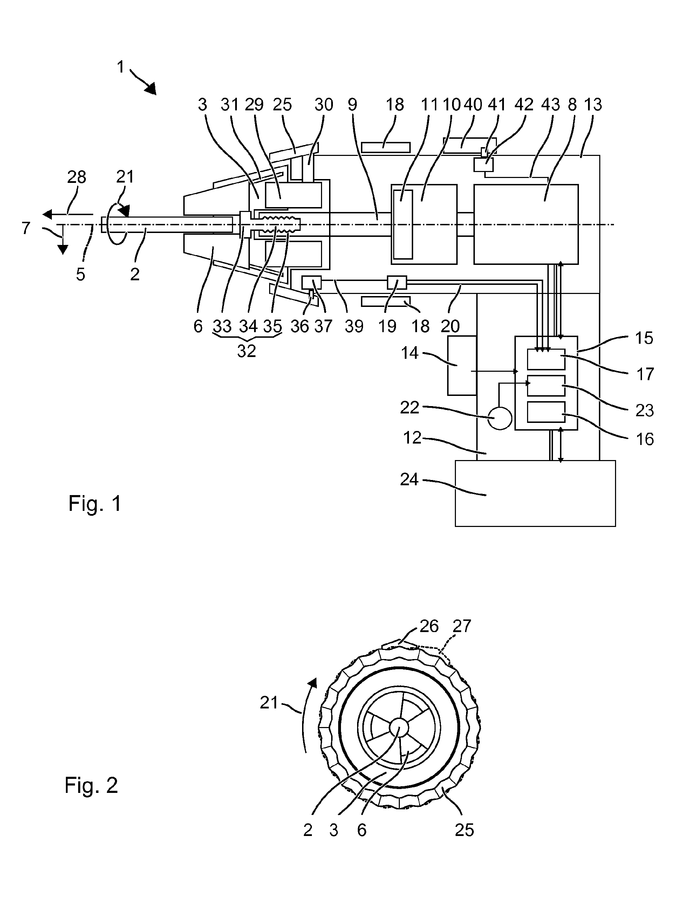

Fig. 1 zeigt einen schematischen Aufbau eines handgehaltenen Elektroschraubers **1** von der Seite, Fig. 2 als Draufsicht von der Seite des Werkzeugs.. Der Elektroschrauber **1** ist für ein sich drehendes Werkzeug **2,** z.B. ein Schrauberbit **2,** Bohrer, Senker, Fräskopf, ausgelegt.

Der Elektroschrauber **1** hat eine Werkzeugaufnahme **3** in deren Aufnahmeraum **4** koaxial zu einer Arbeitsachse **5** das Werkzeug **2** eingesetzt und eingespannt werden kann. Die Werkzeugaufnahme **3** hat mehrere, z.B. drei, Spannbacken **6,** die in radialer Richtung **7** verschiebbar sind. Die Spannbacken **6** klemmen das Werkzeug **2** zwischen sich ein und binden das Werkzeug **2** auf die Weise drehfest an die Werkzeugaufnahme **3.**

Die Werkzeugaufnahme **3** kann von einem Motor **8** um die Arbeitsachse **5** drehend angetrieben werden. Die Werkzeugaufnahme **3** ist auf einer Welle **9** gelagert. Die Welle **9** ist an den Motor **8** angekoppelt. Zwischen Motor **8** und Welle **9** können mehrere Antriebskomponenten geschaltet sein, z.B. ein Getriebe **10** und eine mechanische Rutschkupplung **11.** Die Welle **9** ist sich dauerhaft drehend an den Motor **8** angekoppelt. Eine Entkopplung erfolgt allenfalls durch von dem Anwender nicht beeinflussbarer Sicherheitskupplungen, wie der Rutschkupplung **11.**

Der Elektroschrauber **1** hat einen Handgriff **12,** der an dem Maschinengehäuse **13** befestigt ist. Der Anwender kann den Elektroschrauber **1** mit dem Handgriff **12** während des Betriebs halten und führen.

Der Anwender kann den Motor **8** mittels eines Hauptschalters **14** in Betrieb nehmen. Eine Motorsteuerung **15** steuert ansprechend auf ein von dem Hauptschalter **14** ausgelöstes Steuersignal den Motor **8** an. Die Motorsteuerung **15** kann beispielsweise eine Drehzahlregelung **16** enthalten, um die Drehzahl der Welle **9** auf einen Sollwert auszuregeln. Der Motor **8** wird vorzugsweise automatisch abgeschaltet, sobald der Anwender den Hauptschalter **14** loslässt. Die Motorsteuerung **15** des Elektroschraubers **1** hat eine Einrichtung für eine Drehmomentbegrenzung **17** des Motors **8.** Die Drehmomentbegrenzung **17** deaktiviert den Motors **8,** wenn ein abgegebenen Drehmoment einen eingestellten Abschaltwert erreicht. Die Drehmomentbegrenzung **17** bestimmt hierzu beispielsweise die mittlere Stromaufnahme des Motors **8** als Maß für dessen abgegebenes Drehmoment. Der Abschaltwert kann von einem Anwender vorgegeben werden. Ein Wahlschalter, z.B. ein um das Maschinengehäuse **13** drehbarer Ring **18** hat mehrere Schaltstellungen, welche unterschiedlichen Abschaltmomenten entsprechen. Ein Sensor **19,** z.B. ein Bahnkontakt **19,** greift die unterschiedlichen Schaltstellungen ab und übermittelt ein entsprechendes Steuersignal **20** an die Drehmomentbegrenzung **17.**

Die Drehrichtung **21** der Werkzeugaufnahme **3** kann der Anwender mittels eines Wahlschalters **22** auswählen. Der Wahlschalter **22** kann mechanisch, z.B. durch einen Wechselschalter, oder elektronisch mittels einer entsprechenden Drehrichtungssteuerung **23** der Motorsteuerung **15** die Drehrichtung **21** beeinflussen.

Eine Stromversorgung des Elektroschraubers **1** erfolgt netzgetrieben oder per Batterie **24.**

Die Spannbacken **6** der Werkzeugaufnahme **3** können motorgestützt gespannt und gelöst werden. Der Anwender betätigt hierfür den Hauptschalter **14,** um den Motor **8** in Betrieb zu nehmen, und verschiebt einen von außen greifbaren, speziell vorgesehenen Schaltring **25** aus einer Grundstellung **26** in eine Spannen/Lösen-Stellung **27.** Der Motor **8** treibt über die Welle **9** die Spannbacken **6** an. Die Drehrichtung **21** der Welle **9** gibt vor, ob die Spannbacken **6** sich von der Arbeitsachse **5** für das Lösen des Werkzeugs **2** entfernen oder für das Spannen des Werkzeugs **2** annähern. Bei der dargestellten Ausführungsform wählt der Anwender die Drehrichtung **21** der Welle **9** mittels des Wahlschalters **22,** vorzugsweise werden bei einem Rechtslauf die Spannbacken **6** gespannt und bei einem Linkslauf die Spannbacken **6** gelöst.

Der Schaltring **25** ist ausschließlich für das Umschalten zwischen der Grundstellung **26** und der Stellung **27** zum Spannen/Lösen ausgebildet, d.h. dem Schaltring sind keine weiteren funktionellen Schaltstellungen zugeordnet. Befindet sich der Schaltring **25** in der Grundstellung **26** sind die Spannbacken **6** gegenüber der Werkzeugaufnahme **3** ortsfest. Die Werkzeugaufnahme **3** ist an die Welle **9** angekoppelt und dreht sich, sobald der Motor **8** eingeschaltet ist. Die Werkzeugaufnahme **3** dreht sich gegenüber dem Schaltring **25,** welcher an dem Maschinengehäuse **13** angelegt ist.

Die beiden Schaltpositionen: Grundstellung **26** und Stellung **27** für Spannen/Lösen sind vorzugsweise in Umfangsrichtung **21** versetzt, vorzugsweise ist die Stellung **27** für Spannen/Lösen gegenüber der Grundstellung **26** in Arbeitsrichtung **28** blickend linkshändig versetzt. Das Verschieben aus der Grundstellung **26** erfolgt vorzugsweise gegen eine Federkraft.

Der Schaltring **25** umschließt ringförmig teilweise oder vollständig die Werkzeugaufnahme **3.** Entlang der Außenseite des Elektroschraubers **1** folgt somit unmittelbar auf die Werkzeugaufnahme **3** der Schaltring **25.** Insbesondere sind der Schaltring **25** und die Werkzeugaufnahme **3** nicht durch Teile des Maschinengehäuses **13** voneinander beabstandet. Beispielsweise kann der Schaltring **25** die Werkzeugaufnahme **3** über die gesamte axiale Länge abdecken, wodurch von der Werkzeugaufnahme **3** nur noch deren Stirnseite frei greifbar ist.

Der Schaltring **25** betätigt eine umschaltbare Kupplung **29.** Die Kupplung **29** ist Teil der Werkzeugaufnahme **3** und in dieser aufgehängt oder gelagert. Die Kupplung **29** folgt immer zwangsweise der Drehbewegung der Werkzeugaufnahme **3,** d.h. ist drehfest zu der Werkzeugaufnahme **3.** Die Kupplung **29** koppelt alternativ die Werkzeugaufnahme **3** an die Welle **9** an oder an das Maschinengehäuse **13** an. Beispiele für den Aufbau der Kupplung **29** werden in Zusammenhang mit nachfolgenden Figuren erläutert. Der Schaltring **25** ist mit der umschaltbaren Kupplung **29** derart verbunden, dass in der Grundstellung **26** die umschaltbare Kupplung **29** in die Welle **9** eingreift und in der Stellung **27** für Spannen/Lösen in das Maschinengehäuse **13** eingreift. Die Schaltbewegung des Schaltrings **25** wird von einem Kulissenschieber **30** in eine radiale oder eine axiale Bewegung übertragen, welche anschließend die umschaltbare Kupplung **29** betätigt.

Die Spannbacken **6** sind in Kulissen **31** geführt, welche gegenüber der Arbeitsachse **5** geneigt, in Arbeitsrichtung **28** auf die Arbeitsachse **5** zulaufend sind. Die Spannbacken **6** werden entsprechend aufeinander zubewegt, wenn die Spannbacken **6** in Arbeitsrichtung **28** versetzt werden. Die Spannbacken **6** sind in Umfangsrichtung **21** gegenüber der Werkzeugaufnahme **3** unbeweglich, d.h. die Werkzeugaufnahme **3** kann in die Spannbacken **6** ein Drehmoment einleiten.

Die Spannbacken **6** sind an einen zu der Arbeitsachse **5** koaxialen Gewindeantrieb **32** angebunden. Der Gewindeantrieb **32** beinhaltet einen längs der Arbeitsachse **5** beweglichen Schlitten **33.** Die Spannbacken **6** sind in den Schlitten **33** eingehängt und folgen dessen axialer Bewegung. Der Schlitten **33** ist drehstarr in der Werkzeugaufnahme **3** geführt. Der Schlitten **33** und die Werkzeugaufnahme **3** drehen sich entsprechend synchron. Der Schlitten **33** hat ein Gewinde **34,** das in ein Gegengewinde **35** an der Welle **9** eingreift. Der Schlitten **33** wird axial gegenüber der Welle **9** bewegt, wenn sich Schlitten **33** und Welle **9** relativ zueinander drehen. Wenn andernfalls Schlitten **33** und Welle **9** sich miteinander synchron bewegen, verharrt der Schlitten **33** in seiner axialen Stellung **27.** Die Welle **9** und damit der Gewindeantrieb **32** sind permanent angetrieben. Die relative Drehung von Schlitten **33** und Welle **9** wird durch die umschaltbare Kupplung **29** je nach Schaltstellung erzwungen oder unterbunden. Wenn die umschaltbare Kupplung **29** in das Maschinengehäuse **13** eingreift, ergibt sich eine relative Drehung von der Welle **9** gegenüber der Werkzeugaufnahme **3** und dem Schlitten **33.** Die Schlitten **33** wird durch den Gewindeantrieb **32** axial bewegt. Die Spannbacken **6** werden gespannt oder gelöst. Wenn die umschaltbare Kupplung **29** in die Welle **9** eingreift, bewegt sich die Welle **9** synchron zu der Werkzeugaufnahme **3** und dem Schlitten **33.** Der Gewindeantrieb **32** verharrt in seiner axialen Stellung. Die Spannbacken **6** bleiben in Position und übertragen ein Drehmoment von der Werkzeugaufnahme **3** auf das Werkzeug **2.**

Das Lösen und Spannen des Werkzeugs **2** wird vorzugsweise durch ein spezielles steuerungstechnisches Verfahren des Elektroschraubers **1** kontrolliert.

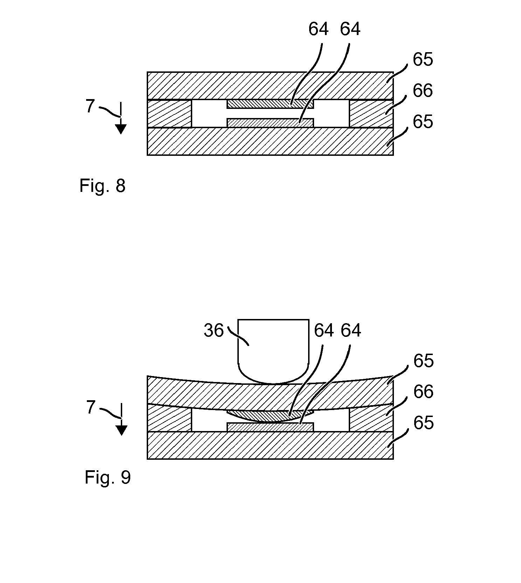

Die Motorsteuerung **15** erkennt die Stellung **26, 27** des Schaltrings **25.** Der beispielhafte Schaltring **25** hat einen Finger **36,** der auf einen elektrischen Bahnkontakt **37** drückt. Der Bahnkontakt ist auf dem Maschinengehäuse **13.** Der Bahnkontakt ist parallel zu der Bewegungsrichtung des Schaltrings **25,** hier beispielhaft in Umfangsrichtung **21** angeordnet. Der Bahnkontakt **37** erzeugt in Abhängigkeit der Stellung des Stellrings **38** ein unterschiedliches elektrisches Signal **39,** z.B. Widerstandswert. Ein bevorzugter Aufbau des Bahnkontakts **37** ist in Zusammenhang mit Fig. 8 beschrieben.

Die Motorsteuerung **15** aktiviert die Drehmomentbegrenzung **17,** wenn der Stellring **38** in der Spannen/Lösen-Stellung **27** ist, und stellt den Sollwert für das Drehmoment auf einen für das Spannen der Spannbacken **6** vorgegebenen Wert ein. Das Drehmoment wird vorzugsweise auf einen Abschaltwert zwischen 10 N/m und 15 N/m begrenzt, wenn der Schaltring **25** in der Spannen/Lösen-Stellung **27** ist. Diese Drehmoment ist zwar für eine typische Anwendung, z.B. Schrauben, Bohren, zu gering, aber ausreichend die Spannbacken **6** zu spannen und lösen. Ein höheres ausgeübtes Drehmoment erreicht keine bessere Klemmkraft, belastet aber das Werkzeug **2** und die Werkzeugaufnahme **3.**

Der Motor **8** läuft an, sobald der Anwender den Hauptschalter **14** betätigt. Aufgrund der umschaltbaren Kupplung **29** werden die Spannbacken **6** mittels des Gewindeantriebs **32** gespannt. Die Motorsteuerung **15** deaktiviert mittelbar durch die Drehmomentbegrenzung **17** automatisch den Motor **8,** wenn das von den Spannbacken **6** rückwirkende Drehmoment den Abschaltwert für das Spannen erreicht. Das Steuerungsverfahren ist im Wesentlichen gleich für das Lösen der Spannbacken **6.** Die Spannbacken **6** laufen in einen Anschlag, welcher als Anstieg des Drehmoments erfasst und zum Stoppen des Motors **8** herangezogen wird. Der Abschaltwert für die Drehmomentbegrenzung **17** kann in beiden Fällen gleich gewählt sein.

Die Drehmomentbegrenzung **17** und die Motorsteuerung **15** können durch einen Mikroprozessor mit entsprechender Peripherie, z.B. Spannungs- und Stromsensoren, bereitgestellt sein.

Der Schaltring **25** kann für zwei unterschiedliche Stellungen **27** für das Lösen und Spannen, also mit der Grundstellung **26** insgesamt drei Stellungen aufweisen. Die Grundstellung **26** ist vorzugsweise zwischen den beiden Stellungen **27** angeordnet. Ferner ist der Schaltring **25** mit einer Feder versehen, welche den Schaltring **25** in die Grundstellung **26** zurückführt. Die Motorsteuerung **15** erfasst die jeweilige Stellung **27** und stellt die Drehrichtung **21** des Motors **8** entsprechend der vom Anwender gewählten Funktion Spannen oder Lösen ein. Zusätzlich stellt die Motorsteuerung **15** vorzugsweise den Abschaltwert für die Drehmomentbegrenzung **17** ein.

Der vorliegend dargestellte Elektroschrauber **1** ist mit einem Schaltgetriebe **10** ausgestattet. Der Anwender kann zwei, drei oder mehr unterschiedliche Untersetzungen durch einen Schieber **40** auswählen. Der Schieber **40** hat einen Finger **41,** der auf einem Bahnkontakt **42** läuft. Der Drehmomentbegrenzung **17** wird das elektrische Signal **43** des Bahnkontakts **42** übermittelt, welche aus der gewählten Untersetzung eine zugehörige Stellgröße ermittelt. Die Drehmomentbegrenzung **17** berücksichtigt die gewählte Untersetzung derart, dass das an der Welle **9** anliegende Drehmoment den Abschaltwert nicht überschreitet. Entsprechend regelt die Drehmomentbegrenzung **17** das von dem Motor **8** abgegebene Drehmoment bei hoher Untersetzung auf einen größeren Sollwert als bei einer geringen Untersetzung.

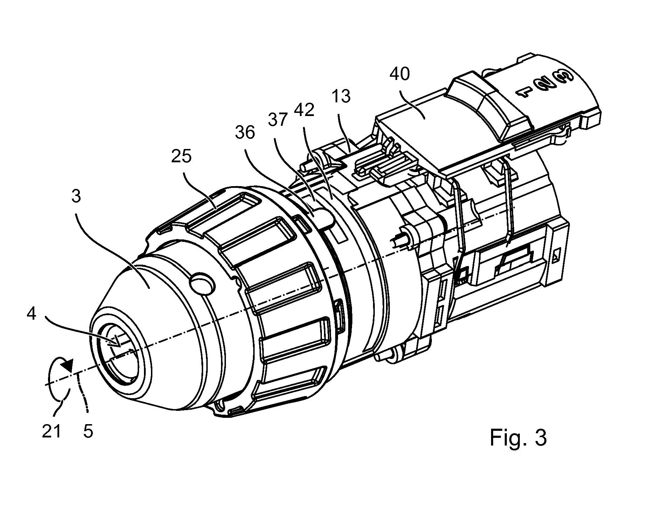

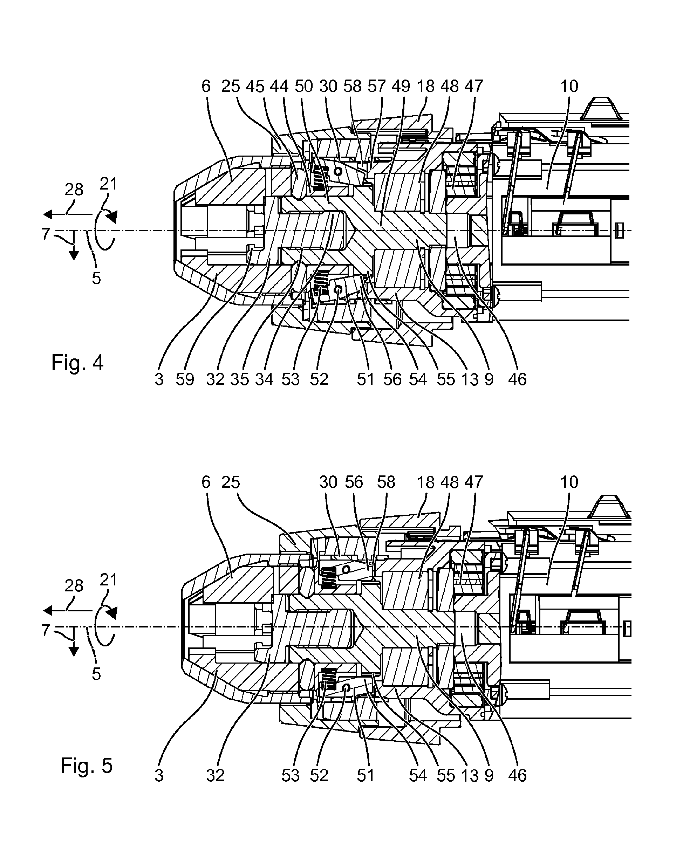

Fig. 3 zeigt eine beispielhafte Werkzeugaufnahme **3** eines Elektroschraubers **1.** Die Werkzeugaufnahme **3** ist in zwei Längsschnitten in Fig. 4 zur Illustration eines Arbeitsbetriebs und in Fig. 5 zur Illustration eines Spannen/Lösen Betriebs dargestellt.

Die Werkzeugaufnahme **3** ist frei drehend auf der Welle **9** gelagert. Die beispielhafte Werkzeugaufnahme 3 hat einen zylindrischen Sitz **44** mit dem sie unmittelbar auf der Welle **9** aufgesetzt ist. Ein Sprengring **45** oder Bolzen sichern die axiale Position der Werkzeugaufnahme **3.** Die Welle **9** ist in permanenten Eingriff mit einem Getriebe **10.** Beispielsweise bildet das antriebsseitige Ende der Welle **9** ein Sonnenrad **46** eines Planetengetriebes **47.** Die Welle **9** ist unmittelbar in einem Drehlager **48** in dem Maschinengehäuse **13** drehbar gelagert. Die Welle **9** hat antriebsseitig einen vollzylindrischen Schaft **49** und abtriebsseitig einen topfförmigen Schaft **50,** der mit einem axialen Sackloch ausgestaltet ist.

Die umschaltbare Kupplung **29** hat mehrere Klinken **51,** welche vorzugsweise an einer dem Getriebe **10** zugewandten Seite angeordnet sind. Die Klinken **51** sind mit Schwenklagern **52** an der Werkzeugaufnahme **3** befestigt. Die Klinken **51** sind in Richtung zu der Arbeitsachse **5** verschwenkbar. Eine Feder **53** hält die Klinke **51** in einer Grundstellung. Die Feder **53** ist beispielhaft als radial orientierte Schraubenfeder dargestellt, alternativ kann die Feder **53** ein elastischer Ring, z.B. ein weicher O-Ring sein. Die Klinke **51** ist gegen die Feder **53** aus der Grundstellung in eine ausgelenkte Stellung verschwenkbar. Fig. 4 zeigen die Klinke **51** in Grundstellung, Fig. 5 zeigt die Klinke **51** in der ausgelenkten Stellung.

Die Klinke **51** ist mit einem Zahn **54** versehen. Der Zahn **54** ist an dem antriebsseitigen Ende der Klinke **51** vorgesehen. Bei der beispielhaften Klinke **51** ist der Zahn **54** der Arbeitsachse **5** zugewandt. Die Welle **9** ist mit einer radialen Verzahnung **55** versehen. Der Zahn **54** greift in der Grundstellung der Klinke **51** in die Verzahnung **55** ein, wodurch die Klinke **51** die Werkzeugaufnahme **3** drehstarr an die Welle **9** zum Übertragen eines Drehmoments ankoppelt. Ist die Klinke **51** in die Freigabestellung verschwenkt, ist der Zahn **54** aus dem Eingriff mit der Verzahnung **55** der Welle **9.** Die Drehmomentkopplung ist aufgehoben.

Die Klinken **51** sind mit einem weiteren Zahn **56** (zweiter Zahn **56)** versehen. Der zweite Zahn **56** greift in der ausgelenkten Stellung der Klinke **51** in das Maschinengehäuse **13** ein. In der Grundstellung der Klinke **51** gelangt der zweite Zahn **56** außer Eingriff mit dem Maschinengehäuse **13.** Das Maschinengehäuse **13** steht stellvertretend für alle Komponenten des Elektroschraubers **1,** welche nicht-drehbar mit dem Maschinengehäuse **13** verbunden sind. Der zweite Zahn **56** ist beispielsweise entgegen der Arbeitsrichtung **28** vorstehend ausgebildet. Das Maschinengehäuse **13** hat einen Ring **57,** der eine in Arbeitsrichtung **28** weisende axiale Verzahnung **58** aufweist.

Der Anwender kann die Klinken **51** mittelbar durch den Schaltring **25** betätigen. Der Schaltring **25** ist um die Werkzeugaufnahme **3** angeordnet von dem Anwender greifbar. Bei dem beispielhaften Schaltring **25** sind die Grundstellung **26** und die Spannen/Lösen-Stellung **27** in Umfangsrichtung **21** versetzt. Der Stellring **38** hat eine in Umfangsrichtung **21** helixförmig verlaufende, radial vorstehende Kontur **30.** Die Kontur **30** kann die Auslenkung der Klinke **51** durch die Feder **53** freigeben (Grundstellung **26;** Fig. 4) oder hemmen (Spannen/Lösen; Fig. 5). Bei der Spannen/Lösen-Stellung **26** liegt die Kontur in radialer Richtung **7** an dem von der Feder **53** radial nach außen gedrückten Schenkel der Kulisse **31** an. Bei der Grundstellung **26** verschiebt sich der anliegende Bereich zu dem anderen Schenkel, welcher von der Feder **53** nach radial Innen verschwenkt wird. Die helixförmige Kontur ist für genau zwei verschiedene Schaltstellungen ausgelegt. Falls eine Unterscheidung einer Spannen-Stellung von einer Lösen-Stellung **26** gewünscht ist, können zwei gegenläufig helixförmige Konturen vorgesehen sein, welche sich in einer Spitze treffen. Die Spitze ist für die Grundstellung **26,** die beiden nach rechts und links laufenden Konturen definieren die Spannen- und die Lösen-Stellung.

Die Welle **9** ist über den Gewindeantrieb **32** mit den Spannbacken **6** gekoppelt. Der Gewindeantrieb **32** verfährt, in Abhängigkeit der Drehrichtung **21** der Welle **9,** die Spannbacken **6** in Arbeitsrichtung **28** oder entgegen der Arbeitsrichtung **28.** Bedingt durch die Kulissen **31,** werden dabei die Spannbacken **6** geschlossen bzw. geöffnet.

Der Gewindeantrieb **32** beinhaltet den Schlitten **33,** der längs der Arbeitsachse **5** beweglich innerhalb der Werkzeugaufnahme **3** angeordnet ist. Der beispielhafte Schlitten **33** ist auf der Arbeitsachse **5** angeordnet. Der Schlitten **33** ist mit einem, vorzugsweise linksgängigen, Gewinde **34** versehen, hier beispielhaft als ein Außengewinde dargestellt. Die Welle **9** hat das zu dem Gewinde **34** komplementäre Gegengewinde **35,** hier beispielhaft ein Innengewinde. Das Gegengewinde **35** ist als Sackloch in die Welle **9** gebohrt. Die beiden Gewinde **34, 35** sind unlösbar im Eingriff. Die vom Motor **8** dauerhaft angetriebene Welle **9** überträgt mittels der Gewinde **34, 35** ein Drehmoment auf den Schlitten **33.** Sofern der Schlitten **33** seinerseits kein Gegenmoment aufbringt, dreht sich der Schlitten **33** zusammen mit der Welle **9** und hält seine axiale Position. Sofern der Schlitten **33** ein Gegenmoment aufbringt, ergibt sich eine Relativdrehung von Schlitten **33** und Welle **9,** was zu einem axialen Verschieben des Schlittens **33** führt. Der Schlitten **33** ist mit den Spannbacken **6** verbunden. Der beispielhafte Schlitten **33** hat mehrere Klauen **59,** die in die Spannbacken **6** eingreifen. Die Klauen **59** koppeln den Schlitten **33** drehstarr an die Spannbacken **6** an. Der Schlitten **33** stützt sich in Umfangsrichtung **21** entsprechend an den Spannbacken **6** ab und übt das Gegenmoment zu der Welle **9** aus. Die Schlitten **33** verfährt längs der Arbeitsachse **5** und verschiebt dabei die Spannbacken **6.** Die Bewegungsrichtung des Schlitten **33** hängt von der Drehrichtung **21** der Welle **9** ab. Bei dem vorteilhaften Linksgewinde werden die Spannbacken **6** geschlossen, wenn die Welle **9** im Rechtslauf, und die Spannbacken **6** geöffnet, wenn die Welle **9** im Linkslauf ist.

Der linksgängige Gewindeantrieb **32** vereinfacht den Aufbau zusätzlich. Beim Schrauben und Bohren läuft die Welle **9** rechts herum. Die Gewindeantrieb **32** verschiebt den Schlitten **33** soweit, bis die Spannbacken **6** an dem Werkzeug **2** anliegen. Danach ist der Schlitten **33** in Arbeitsrichtung **28** gehemmt. Die axiale Hemmung bewirkt, dass der Gewindeantrieb **32** ein Drehmoment auf die Spannbacken **6** zum Antreiben der Werkzeugaufnahme **3** überträgt. Das Drehmoment wird somit teilweise über die schaltbare Kupplung **29** und teilweise über den Gewindeantrieb **32** auf die Werkzeugaufnahme **3** übertragen. Die Verzahnung **54** mit der Welle **9** wäre somit für den rechtsläufigen Betrieb optional. Um Anwendungen mit einem linksläufigen Antrieb zu ermöglichen, z.B. zum Herausdrehen einer Schraube, ist die Ankopplung der Werkzeugaufnahme **3** an die Welle **9** notwendig.

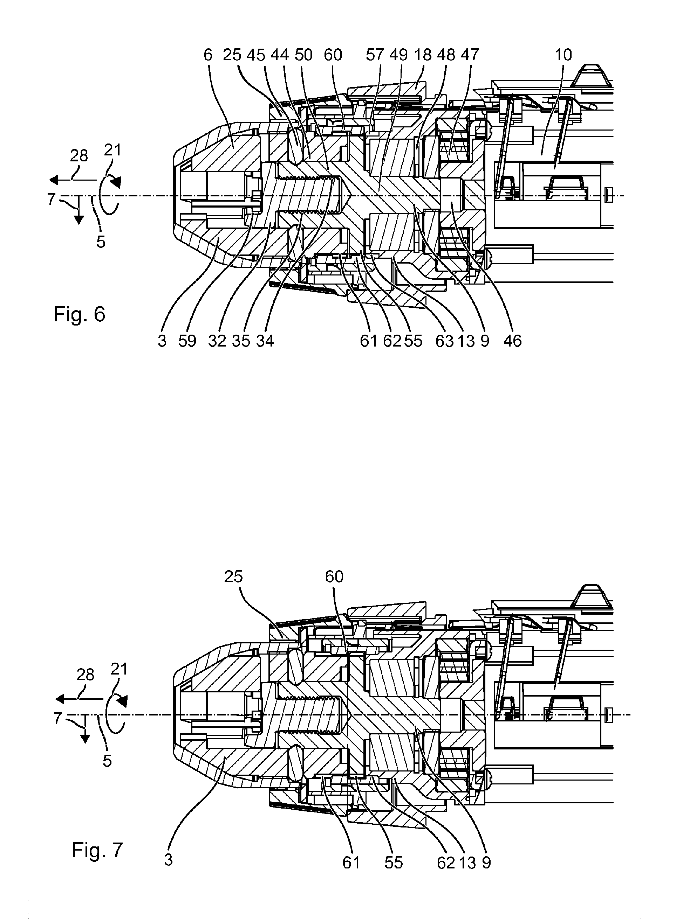

Die umschaltbare Kupplung **29** kann anstelle oder zusätzlich zu den schwenkbaren Klinken **51** ein oder mehrere axial verschiebbare Kupplungselemente aufweisen (Fig. 6, 7). Die beispielhaft dargestellte Ausgestaltung ist ein Hohlrad **60.** Die Werkzeugaufnahme **3** hat eine axiale Kulisse **61,** auf welcher das Hohlrad **60** axial gleitend gelagert ist. Das Hohlrad kann zwischen zwei Positionen entsprechend der Grundstellung **26** (Fig. 6) und der Spannen/Lösen-Stellung **27** verschoben werden (Fig. 7). Das Verschieben des Hohlrads **60** kann wie bei der vorherhergenden Ausführungsform mittels eines Schaltrings **25** und einer Kontur erfolgen. Ein oder mehrere Federn können vorgesehen sein, welche den Betätigungsmechanismus **25** in die Grundstellung **26** zurücksetzen.

Das Hohlrad **60** hat eine Verzahnung **62,** welche vorzugsweise als radiale Verzahnung ausgebildet ist, die in die radiale Verzahnung **55** der Welle **9** eingreifen kann. Der Eingriff erfolgt nur, wenn das Hohlrad **60** in der Grundstellung ist. Bei dem dargestellten Beispiel ist das Hohlrad **60** dabei in einer in Arbeitsrichtung **28** hinteren Stellung. Das Maschinengehäuse **13** hat in dem Beispiel eine radiale Verzahnung **63,** welche identisch zu der radialen Verzahnung **55** der Welle **9** ausgebildet ist und zu dieser benachbart angeordnet ist. Die Verzahnung **62** des Hohlrads **60** kann von der Welle **9** gelöst und mit der Verzahnung **63** des Maschinengehäuses **13** in Eingriff gebracht werden (Fig. 7). Die axiale Abmessung der Verzahnung **62** des Hohlrads **60** ist gleich oder geringer dem Verschiebweg von der Grundstellung **26** in die Spannen/Lösen-Stellung **27.** Hierdurch gelangt die Verzahnung **63** aus dem Eingriff mit der Welle **9,** wenn die Verzahnung **63** mit dem Maschinengehäuse **13** ist, oder die Verzahnung **63** ist in Eingriff mit der Welle **9** ohne mit dem Maschinengehäuse **13** in Eingriff zu sein.

Das Maschinengehäuse **13** kann mit einer radialen Innenverzahnung versehen sein, in welche bei der Spannen/Lösen Stellung **27** eine radiale Außenverzahnung des Hohlrads **60** eingreift.

Fig. 8 und Fig. 9 zeigen den Bahnkontakt **37** in einem Querschnitt. Der Bahnkontakt **42** hat zwei, in radialer Richtung **7** beabstandet Leiterbahnen **64.** Die beiden Leiterbahnen **64** können beispielsweise jeweils auf einer flexiblen Folie **65** aufgebracht sind. Zwischen den beiden Folien **65** ist eine weitere Folie **66** angeordnet, die an der Position der der Leiterbahnen **64** geschlitzt ist. Der Finger **36** drückt lokal unter sich die beiden Leiterbahnen **64** zusammen, während die Leiterbahnen **64** andernorts aufgrund der Elastizität der Folien **65, 66** voneinander beabstandet sind. Eine oder beide der Leiterbahnen **64** können als durchgehender Kohlestreifen für eine Bestimmung der Position basierend auf dem elektrischen Widerstand ausgebildet sein.

## Patentansprüche

1. Handwerkzeugmaschine **(1)** mit
einem Maschinengehäuse **(13),**
einem Motor **(8),**
einer von dem Motor **(8)** angetriebenen Welle **(9),**
einer Werkzeugaufnahme **(3),** die auf der Welle **(9)** gelagert ist, einen Aufnahmeraum **(4)** zum Aufnehmen eines Werkzeugs **(2)** aufweist und eine in einer Kulisse **(31)** geführte in den Aufnahmeraum **(4)** hineinragende Spannbacke **(6)** aufweist,
einem Schlitten **(33),** der mit der Spannbacke **(6)** gekoppelt ist und der ein in ein Gegengewinde **(35)** der Welle **(9)** eingreifendes Gewinde **(34)** zum Ausbilden eines Gewindeantriebs **(32)** aufweist,
einem von einem Anwender zwischen einer ersten Stellung **(26)** und einer zweiten Stellung **(27)** verschiebbares Betätigungselement **(25),** und
einer umschaltbaren Kupplung **(29),** die auf der Werkzeugaufnahme **(3)** gelagert ist und den Stellungen **(26, 27)** des Betätigungselements **(25)** entsprechend alternativ in die Welle **(9)** oder das Maschinengehäuse **(13)** eingreift.

2. Handwerkzeugmaschine nach Anspruch 1, **dadurch gekennzeichnet, dass** die Werkzeugaufnahme **(3)** relativ zu der Welle **(9)** drehbar auf der Welle **(9)** gelagert ist.

3. Handwerkzeugmaschine nach Anspruch 1 oder 2, **dadurch gekennzeichnet, dass** die Welle **(9)** permanent an den Motor **(8)** gekoppelt ist.

4. Handwerkzeugmaschine nach einem der vorhergehenden Ansprüche, **dadurch gekennzeichnet, dass** die Welle **(9)** unmittelbar mit einem Getriebe **(10)** oder dem Motor **(8)** verbunden ist.

5. Handwerkzeugmaschine nach einem der vorhergehenden Ansprüche, **dadurch gekennzeichnet, dass** die Welle **(9)** eine Verzahnung **(55)** und das Maschinengehäuse **(13)** eine Verzahnung **(58)** aufweisen, die umschaltbare Kupplung **(29)** ein bewegliches Element **(51)** mit wenigstens einer Verzahnung **(54, 57),** wobei das bewegliche Element **(51)** in einer der ersten Stellung **(26)** entsprechenden Stellung mit einer der wenigstens einen Verzahnung **(54, 57)** mit der Verzahnung **(55)** der Welle **(9)** in Eingriff ist und mit keiner der wenigstens einen Verzahnung **(54, 57)** mit dem Maschinengehäuse **(13)** in Eingriff ist und wobei das bewegliche Element **(51)** in einer der zweiten Stellung **(27)** entsprechenden Stellung mit keiner der wenigstens einen Verzahnung **(54, 57)** mit der Verzahnung **(55)** der Welle **(9)** in Eingriff ist und mit einer der wenigstens einen Verzahnung **(54, 57)** mit dem Maschinengehäuse **(13)** in Eingriff ist

6. Handwerkzeugmaschine nach einem der vorhergehenden Ansprüche, **dadurch gekennzeichnet, dass** die Welle **(9)** einteilig ausgebildet ist.

7. Handwerkzeugmaschine nach einem der vorhergehenden Ansprüche, dass das Gegengewinde **(35)** als Sackloch in der Welle **(9)** ausgebildet ist.

8. Handwerkzeugmaschine nach einem der vorhergehenden Ansprüche, **dadurch gekennzeichnet, dass** der Betätigungsmechanismus **(25)** mit einen elektrischen Geber **(37)** versehen ist und eine auf den elektrischen Geber **(37)** ansprechende, die Drehmomentabgabe des Motors **(8)** begrenzende Drehmomentbegrenzung **(17)** aufweist.

9. Handwerkzeugmaschine nach Anspruch 8, **dadurch gekennzeichnet, dass** der Betätigungsmechanismus **(25)** einen Finger **(36)** aufweist, der einen Bahnkontakt **(37)** betätigt.

10. Steuerungsverfahren für eine Handwerkzeugmaschine, die eine Werkzeugaufnahme **(3)** mit beweglichen Spannbacken **(6)** und einen Betätigungsmechanismus **(25)** zum Wählen zwischen einem Antreiben der Werkzeugaufnahme **(3)** oder einem Spannen/Lösen der Spannbacken **(6)** mittels eines Motors **(8)** aufweist, wobei der Betätigungsmechanismus **(25)** einen elektrischen Geber **(37)** beinhaltet, der bei einer der Wahl des Spannen/Lösen ein Signal **(39)** erzeugt, mit den Schritten:
Aktivieren einer Drehmomentbegrenzung **(17)** ansprechend auf das Signal **(39),** Begrenzen einer Drehmomentabgabe des Motors **(8)** auf einen auf das Spannen und Lösen der Spannbacken **(6)** abgestimmten Abschaltwert und Abschalten des Motors **(8)** sobald der Abschaltwert erreicht ist.

11. Steuerungsverfahren nach Anspruch 10, **dadurch gekennzeichnet, dass** die Handwerkzeugmaschine ein Schaltgetriebe **(10)** mit einem elektrischen Geber **(42)** aufweist, wobei der Geber **(42)** ein dem gewählten Übersetzungsverhältnis anzeigendes Signal **(43)** erzeugt, mit den Schritten:
Aktivieren einer Drehmomentbegrenzung **(17)** ansprechend auf das Signals **(39)** des Betätigungsmechanismus **(25),**
Begrenzen einer Drehmomentabgabe des Motors **(8)** unter Berücksichtigung des von dem Schaltgetriebe **(10)** übermittelten Signals **(43),** um einen von dem Schaltgetriebe **(10)** abgegebenes Drehmoment auf einen auf das Spannen und Lösen der Spannbacken **(6)** abgestimmten Abschaltwert zu begrenzen und Abschalten des Motors **(8)** sobald der Abschaltwert erreicht ist.
